# EUROPÄISCHE PATENTANMELDUNG

(11) **EP 4 737 719 A1**
(43) Veröffentlichungstag der Anmeldung: **06.05.2026**
(21) Anmeldenummer: 25206768.1
(22) Anmeldetag: 06.10.2025
(51) Int. Cl.: F03D 80/70, F03D 15/00

(54) **LAGERANORDNUNG FÜR EINE WINDKRAFTANLAGE**

(30) Priorität: 30.10.2024 DE 102024210467
(71) Anmelder: ZF Friedrichshafen AG, 88046 Friedrichshafen (DE); ZF Wind Power Antwerpen NV, 3920 Lommel (BE)
(72) Erfinder: Klein-Hitpass, Arno, 52074 Aachen (DE)
(74) Vertreter: ZF Friedrichshafen AG

(57) **Zusammenfassung**

Die Erfindung betrifft eine Lageranordnung für eine Windkraftanlage zum Lagern eines Triebstrangs an einem Turm der Windkraftanlage. Die Lageranordnung umfasst eine Grundplatte, welche an dem Turm anbringbar ist, und eine Hauptlagereinheit zum drehbaren Lagern einer Rotorwelle des Triebstrangs und zum Abstützen von radialen Kräften der Rotorwelle. Die radialen Kräfte umfassen mit Bezug auf eine Rotorwellenachse Komponenten in einer zu der Rotorwellenachse senkrechten horizontalen Querrichtung und in einer zu der Rotorwellenachse und der Querrichtung senkrechten Hochrichtung. Die Lageranordnung umfasst ferner ein Lagergehäuse zum Aufnehmen und Lagern von Teilen des Triebstrangs und eine Hilfslagereinheit zum Abstützen des Lagergehäuses. Die Lageranordnung umfasst zwei oder mehr Koppelelemente zum Lagern von mindestens einer der Hauptlagereinheit und der Hilfslagereinheit an der Grundplatte. Jedes Koppelelement ist als ein Stablenker ausgebildet, welcher an seinen zwei Enden drehbar gelagert ist und in seiner Längsrichtung eine größere Steifigkeit aufweist als quer zu seiner Längsrichtung.

## Beschreibung

### Technisches Gebiet

Die vorliegende Offenbarung bezieht sich auf eine Lageranordnung für eine Windkraftanlage. Die vorliegende Offenbarung bezieht sich ferner auf eine Windkraftanlage mit der Lageranordnung.

### Stand der Technik

Windkraftanlagen sind bekannt, welche dazu dienen, aus Windenergie durch Umwandlung Elektrizität zu erzeugen. Zur Umwandlung ist in derartigen Anlagen ein Rotor vorgesehen, welcher dazu ausgebildet ist, Windenergie in eine mechanische Leistung, beispielsweise in eine Rotation mit einem Drehmoment, umzuwandeln. Das so erzeugte Drehmoment kann in einen Triebstrang eingeleitet werden, um in elektrische Leistung umgewandelt zu werden, beispielsweise durch einen Generator. Aufgrund der hohen Gewichte und Kräfte, die beispielsweise bei großen Windkraftanlagen mit einer Leistung von mehreren Megawatt auftreten, werden hinsichtlich Belastbarkeit und Krafteinleitung hohe Anforderungen an die Lagerung des Triebstrangs gestellt. In Anbetracht der Anforderungen werden zur Aufnahme und Lagerung des Triebstrangs massive Gehäuse mit hoher Steifigkeit zur Lagerung verwendet, was ein hohes Gewicht zur Folge haben kann.

### Darstellung der Erfindung

Ein erster Aspekt der vorliegenden Offenbarung betrifft eine Lageranordnung für eine Windkraftanlage zum Lagern eines Triebstrangs an einem Turm der Windkraftanlage. Die Windkraftanlage kann einen Rotor aufweisen. Der Rotor kann dazu ausgebildet sein, eine Windenergie in eine rotatorische mechanische Energie umzuwandeln und diese in den Triebstrang einzuleiten. Die Windkraftanlage kann einen Turm sowie eine Gondel aufweisen, welche zumindest Teile des Triebstrangs aufnimmt und lagert. Die Gondel kann an einem oberen Ende des Turms angebracht sein. Die Gondel kann drehbar an dem Turm angebracht sein. Die Gondel kann um eine vertikale Gierachse drehbar sein, um eine Gierbewegung der Gondel und somit der Rotorwelle relativ zu dem Turm auszuführen. Die Windkraftanlage kann ein Gierlager zum Bereitstellen der Gierbewegung aufweisen. Die Gierbewegung kann dazu dienen, die Gondel beziehungsweise den Triebstrang in einer horizontalen Ebene relativ zu dem Wind auszurichten, beispielsweise um einen gewünschten Anstellwinkel zu der Windrichtung zu bewirken. Ein unteres Ende des Turms kann an einem Boden verankert sein. Alternativ kann das untere Ende des Turms an einer Offshore-Windanlagenplattform angebracht sein.

Der Triebstrang kann einen Generator aufweisen, um Windenergie in elektrische Energie umzuwandeln. Der Rotor kann beispielsweise über eine Rotorwelle des Triebstrangs mit dem Generator verbunden sein. Der Rotor kann mehrere Rotorblätter, beispielsweise drei Rotorblätter, aufweisen. Der Triebstrang kann eine Nabe aufweisen, über welche der Rotor an der Rotorwelle gekoppelt ist. Die Nabe kann dazu ausgebildet sein, einen Anstellwinkel der Rotorblätter zu verstellen. Der Triebstrang kann ein Getriebe aufweisen, welches in einem Drehmomentfluss zwischen dem Rotor und dem Generator angeordnet ist. Der Generator kann dazu ausgebildet sein, die Rotation der Rotorwelle oder die Rotation eines Abtriebs des Getriebes für Stromerzeugung zu nutzen. Das Getriebe kann dazu ausgebildet sein, eine Drehzahl der Rotorwelle in eine andere, beispielsweise höhere, Drehzahl zum Antreiben des Generators zu überführen. Die Drehzahl der Rotorwelle kann im Betrieb zum Beispiel zwischen 2 U/min und 30 U/min, beispielsweise zwischen 5 U/min und 20 U/min, betragen. Die Drehzahl zum Antreiben des Generators kann im Betrieb zum Beispiel zwischen 500 U/min und 3000 U/min, beispielsweise zwischen 900 U/min und 2000 U/min, betragen. Ein Antrieb des Getriebes kann mit dem Rotor mechanisch wirkverbunden sein und der Abtrieb des Getriebes kann beispielsweise mit dem Generator mechanisch wirkverbunden sein. Das Getriebe kann dazu ausgebildet sein, ein Drehmoment von der Rotorwelle an den Generator zu übertragen. Das Drehmoment an dem Antrieb des Getriebes kann im Betrieb zum Beispiel zwischen 500.000 Nm und 15.000.000 Nm, beispielsweise zwischen 3.000.000 Nm und 10.000.000 Nm, betragen. Der Triebstrang kann ferner Hilfsaggregate aufweisen. Die Hilfsaggregate können dazu ausgebildet sein, Parameter des restlichen Triebstrangs und physikalische Größen der Windkraftanlage zu beeinflussen. Die Hilfsaggregate können beispielsweise ein Heizsystem, ein Kühlsystem, ein Ausrichtsystem für die Gondel, ein Verstellsystem für die Nabe und/oder Wandlersysteme, beispielsweise Wechselrichter, für die erzeugte elektrische Energie umfassen.

Die Lageranordnung kann dazu ausgebildet sein, mindestens manche kinematische Freiheitsgrade des Triebstrangs abzustützen. Die kinematischen Freiheitsgrade können drei Verschiebungen und drei Rotationen umfassen. Die Lageranordnung kann dazu ausgebildet sein, einen, mehrere oder alle Freiheitsgrade des Triebstrangs oder von Teilen davon abzustützen. Je nach Ausgestaltung der Lageranordnung kann eine weitere Lageranordnung vorgesehen sein, welche freibleibende Freiheitsgrade sperrt und/oder Teile des Triebstrangs, die nicht durch die Lageranordnung gelagert sind, lagert. Grundsätzlich kann es zum Betrieb der Windkraftanlage erforderlich sein, fünf der sechs Freiheitsgrade der Rotorwelle festzuhalten. Ein rotatorischer Freiheitsgrad der Rotorwelle kann im Betrieb frei bleiben, um eine Rotation der Rotorwelle und ein damit einhergehendes Einleiten von Drehmoment zur Energieerzeugung zu ermöglichen. Die Rotation der Rotorwelle kann ein Reaktionsmoment in dem Generator bewirken. Das Reaktionsmoment in dem Generator kann durch die Lageranordnung abgestützt werden. Der Triebstrang kann auch eine Bremseinrichtung aufweisen, welche die Rotation der Rotorwelle abbremsen kann, beispielsweise bei zu starkem Wind oder für Wartungsarbeiten.

Die Lageranordnung weist eine Grundplatte auf, welche an dem Turm anbringbar ist. Die Grundplatte kann drehbar an dem Turm gelagert sein, beispielsweise unmittelbar an dem Turm oder mittelbar über ein Gierlager. Die Grundplatte kann dazu ausgebildet sein, Anbindungspunkte für die Lageranordnung zur Krafteinleitung und/oder Momenteneinleitung bereitzustellen. Die Anbindungspunkte können starre Verbindungen und/oder gelenkige Verbindungen umfassen. Die Grundplatte kann beispielsweise als ein zumindest teilweise ringförmiges Element ausgebildet sein. Die Grundplatte kann auch als ein Schalenelement ausgebildet sein. Die Grundplatte kann an einem rotorseitigen Ende einen Durchgang für die Rotorwelle aufweisen.

Die Lageranordnung weist eine Hauptlagereinheit zum drehbaren Lagern einer Rotorwelle des Triebstrangs und zum Abstützen von radialen Kräften der Rotorwelle auf. Die Hauptlagereinheit kann an einem rotorseitigen Endabschnitt der Gondel angeordnet sein, beispielsweise in der Nähe der Nabe. Die Hauptlagereinheit kann mit der Grundplatte einstückig ausgebildet sein oder daran befestigt sein. Die Hauptlagereinheit kann ein Hauptlager aufweisen, welches die Rotorwelle drehbar lagert. Das Hauptlager kann ein Wälzlager und/oder ein Gleitlager aufweisen.

Die radialen Kräfte weisen mit Bezug auf eine Rotorwellenachse Komponenten in einer zu der Rotorwellenachse senkrechten horizontalen Querrichtung und in einer zu der Rotorwellenachse und der Querrichtung senkrechten Hochrichtung auf. Die Rotorwellenachse kann eine Mittelachse der Rotorwelle sein. Die Rotorwellenachse kann unter Umständen nicht gerade verlaufen, sondern einer Biegung der Rotorwelle folgen. Die radialen Kräfte der Rotorwelle können beispielsweise eine Gewichtskraft des Rotors, die Gewichtskraft der Rotorwelle und/oder Betriebskräfte aufgrund der Rotation der Rotorwelle umfassen. Die Hauptlagereinheit kann ferner ausgebildet sein, Nickmomente um eine in der Querrichtung verlaufende Achse und/oder Giermomente um eine in der Hochrichtung verlaufende Achse in die Grundplatte einzuleiten. Die Hauptlagereinheit kann ferner dazu ausgebildet sein, axiale Verschiebungen entlang der Rotorwellenachse zuzulassen. Beispielsweise kann das Hauptlager als ein reines Radiallager, zum Beispiel als ein zylindrisches Gleitlager, ausgebildet sein. Alternativ kann die Hauptlagereinheit axiale Kräfte der Rotorwelle mindestens teilweise abstützen.

Die Lageranordnung weist ein Lagergehäuse zum Aufnehmen und Lagern von Teilen des Triebstrangs auf. Das Lagergehäuse kann dazu ausgebildet sein, nur Teile des Triebstrangs oder auch den gesamten Triebstrang aufzunehmen und zu lagern. Beispielsweise kann das Lagergehäuse nur das Getriebe, nur den Generator oder sowohl das Getriebe als auch den Generator abstützen. Das Lagergehäuse kann auch dazu ausgebildet sein, rotierbare Elemente abzustützen. Die rotierbaren Elemente können beispielsweise die Rotorwelle oder Getriebeelemente wie Zahnräder aufweisen. Die in dem Lagergehäuse aufgenommenen und gelagerten Teile und/oder rotierbaren Elemente können Kräfte und/oder Momente in das Lagergehäuse einleiten.

Die Lageranordnung weist eine Hilfslagereinheit zum Abstützen des Lagergehäuses auf. Die Hilfslagereinheit kann dazu ausgebildet sein, ein Torsionsmoment um die Rotorwellenachse, welches von dem Triebstrang auf das Lagergehäuse aufgebracht wird, aufzunehmen und abzustützen. Die Hilfslagereinheit kann alternativ oder zusätzlich dazu ausgebildet sein, axiale Kräfte in Richtung der Rotorwellenachse aufzunehmen und abzustützen. Die Hilfslagereinheit kann auch dazu ausgebildet sein, weitere Kräfte, beispielsweise Gewichtskräfte sowie Kräfte, die nicht vollständig durch die Hauptlagereinheit abgestützt werden, in die Grundplatte einzuleiten.

Die Lageranordnung weist zwei oder mehr Koppelelemente zum Lagern von mindestens einer der Hauptlagereinheit und der Hilfslagereinheit an der Grundplatte auf. Jedes Koppelelement ist als ein Stablenker ausgebildet, welcher an seinen zwei Enden drehbar gelagert ist und in seiner Längsrichtung eine größere Steifigkeit aufweist als quer zu seiner Längsrichtung. Die drehbare Lagerung des Stablenkers kann über ein ortsfestes rotatorisches Gelenk erfolgen. Beispiele für solche Gelenke können ein Kugelgelenk, ein Kreuzgelenk, ein Gleichlaufgelenk und ein Drehgelenk umfassen. Das Kugelgelenk kann drei freie rotatorische Freiheitsgrade aufweisen. Das Kreuzgelenk und das Gleichlaufgelenk können zwei freie rotatorische Freiheitsgrade und einen gesperrten rotatorischen Freiheitsgrad aufweisen. Das Drehgelenk kann einen freien rotatorischen Freiheitsgrad und zwei gesperrte rotatorische Freiheitsgrade aufweisen.

Die drehbare Lagerung an der Grundplatte kann unmittelbar oder mittelbar erfolgen. Bei einer unmittelbaren Lagerung kann das Koppelelement direkt an der Grundplatte gelagert sein. Bei einer mittelbaren Lagerung kann das Koppelelement an einem weiteren Bauteil gelagert sein, welches an der Grundplatte gelagert ist. Ein Beispiel für ein solches weiteres Bauteil ist ein später beschriebenes Stützelement.

Das als Stablenker ausgebildete Koppelelement kann ein längliches Element sein und seine größte Ausdehnung in seiner Längsrichtung haben. Der Stablenker kann ein erstes Ende und ein zweites Ende aufweisen. Der Stablenker kann sich von dem ersten Ende zu dem zweiten Ende in seiner Längsrichtung erstrecken. Der Stablenker kann derart ausgebildet sein, dass ein Festhalten eines der Enden eine Führungskurve für das andere Ende bereitstellt. Wenn die Länge des Stablenkers konstant ist, kann die Führungskurve ein Kreis mit der Länge als Radius sein. Werden beide Enden mit Bezug auf drei rotatorische Freiheitsgrade drehbar gelagert, so kann der Stablenker lediglich einen translatorischen Freiheitsgrad in seiner Längsrichtung sperren; alle anderen Freiheitsgrade sind frei. Somit ist ein in ein kinematisches System eingesetzter Stablenker in der Lage, einen Freiheitsgrad des kinematischen Systems zu sperren. Durch die Lagerung des als Stablenker ausgebildeten Koppelelements können auch bis zu drei weiteren Freiheitsgrade pro Koppelelement gesperrt werden.

Der Stablenker kann einen Dämpfungsgrad aufweisen. Der Dämpfungsgrad kann über passive oder aktive Dämpfungselemente bereitgestellt werden. Der Dämpfungsgrad kann dazu dienen, Schwingungen zu unterdrücken. Der Stablenker kann ausgebildet sein, eine Aktuatorkraft in seiner Längsrichtung aufzubringen. Die Aktuatorkraft kann über einen Aktuator bereitgestellt werden. Die Aktuatorkraft kann dazu dienen, über eine Längenänderung des Stablenkers eine Bewegung in dem kinematischen System herbeizuführen.

Durch die Ausbildung als Stablenker ist jedes Koppelelement in der Lage, einen Freiheitsgrad zu sperren. Werden zwei derartige Koppelelemente im Wesentlichen parallel und entlang derselben Richtung angeordnet, beispielsweise in einer Ebene, so können zwei zusammenhängende Freiheitsgrade, beispielsweise eine Verschiebung und eine Torsion quer zu der Verschiebung, abgestützt werden. Je genauer die Ausrichtung der zwei Koppelelemente übereinstimmt, desto geringer sind auftretende parasitäre Wechselwirkungen mit anderen Freiheitsgraden, beispielsweise in Form von parasitären Kräften. Dennoch kann das Abstützen von zwei Freiheitsgraden auch durch ein Paar von Koppelelementen erzielt werden, welche nicht in einer Ebene angeordnet sind, sondern davon abweichen. Dadurch erzeugte parasitäre Kräfte können anderweitig aufgenommen werden, beispielsweise durch weitere Koppelelemente und/oder durch weitere Lagereinrichtungen.

Ein kinematisches System der durch die Rotorwelle belasteten Hauptlagereinheit und Hilfslagereinheit umfasst insgesamt zwölf Freiheitsgrade, nämlich jeweils sechs für die Hauptlagereinheit und die Hilfslagereinheit. Um ein statisch bestimmtes System bereitzustellen, müssen alle zwölf Freiheitsgrade gesperrt werden. In einer Ausgestaltung kann die Hauptlagereinheit über mindestens ein Paar Koppelelemente gelagert sein. Alternativ oder zusätzlich kann die Hilfslagereinheit über mindestens ein Paar Koppelelemente gelagert sein. In einer Ausgestaltung kann die Hauptlagereinheit über drei Paare von Koppelelementen gelagert sein. In einer solchen Ausgestaltung werden alle sechs Freiheitsgrade der Hauptlagereinheit über Koppelelemente gelagert. Gleichermaßen kann in einer Ausgestaltung die Hilfslagereinheit über drei Paare von Koppelelementen mit Bezug auf allen sechs Freiheitsgraden gelagert sein. Folglich kann das kinematische System durch maximal zwölf Koppelelemente vollständig und statisch bestimmt gelagert werden. Je nach Anzahl der Koppelelemente und der damit gesperrten Freiheitsgrade kann die Lageranordnung auch weitere Lagereinrichtungen als die Koppelelemente aufweisen, um die zur statischen Bestimmtheit fehlenden Freiheitsgrade zu sperren. Beispielsweise können die zur statischen Bestimmtheit fehlenden Freiheitsgrade durch entsprechende Lagereinrichtungen starr und/oder teilgelenkig abgestützt sein. Die Abstützung kann beispielsweise an der Grundplatte erfolgen.

Mit der Lageranordnung gemäß dem ersten Aspekt wird eine Lageranordnung bereitgestellt, welche mindestens zwei Koppelelemente zum Lagern der Hauptlagereinheit und/oder der Hilfslagereinheit aufweist. Somit kann mindestens ein Freiheitsgrad der Hauptlagereinheit und/oder mindestens ein Freiheitsgrad der Hilfslagereinheit durch ein als Stablenker ausgebildetes Koppelelement gesperrt werden. Da der Stablenker je nach Lagerung einen bis drei Freiheitsgrade sperrt, kann auf einfache Weise eine geeignete Anzahl Freiheitsgrade abgestützt werden. Beispielsweise können Freiheitsgrade, die hohe Lasten aufweisen, durch ein Koppelelement mit nur einem gesperrten Freiheitsgrad abgestützt werden, um die hohe Last in der Längsrichtung des Koppelelements zu isolieren. Beispielsweise können Freiheitsgrade, die geringe Lasten aufweisen, durch ein Koppelelement mit drei gesperrten Freiheitsgraden abgestützt werden. Die Koppelelemente ermöglichen demnach eine flexible Gestaltung von Kraft-übertragungspfaden und räumliche Führungen der Bauteile. Dies ermöglicht es, Steifigkeiten in Richtung einer hohen Last zu maximieren und Steifigkeiten in Richtung einer geringen Last zu minimieren. Naturgemäß wird Steifigkeit durch gezielten Materialeinsatz bereitgestellt. Mit der Lageranordnung des ersten Aspekts kann daher der Materialeinsatz in Anbetracht der Lasten optimiert werden, um eine effektive Abstützung zu gewährleisten. Demzufolge erzielt die Lageranordnung des ersten Aspekts hohe Steifigkeiten bei gleichzeitig geringem Gewicht.

In einer Ausführungsform ist eine der Hauptlagereinheit und der Hilfslagereinheit über ein Paar erster Koppelelemente, welche in entgegengesetzten Richtungen entlang der Querrichtung verlaufen, an der Grundplatte gelagert. In der vorliegenden Offenbarung werden die Begriffe "erstes", "zweites" und "drittes" lediglich zur einfacheren Referenzierung verwendet, ihre Reihenfolge ist beliebig gewählt. Solange nichts anderes angegeben ist, bezieht sich der Begriff "erster" auf eine Erstreckung in der Querrichtung, der Begriff "zweiter" auf eine Erstreckung in der Hochrichtung und der Begriff "dritter" auf eine Erstreckung in der Richtung der Rotorwellenachse. Unabhängig von der Bezeichnung können alle oder nur manche dieser Elemente vorgesehen sein. Beispielsweise kann ein zweites Element ohne erstes und drittes Element vorgesehen sein. Dies würde einer Lageranordnung mit lediglich einem Paar Koppelelemente, welche sich in der Hochrichtung erstrecken, entsprechen. Es können manche Elemente zusammengefasst sein. Beispielsweise kann ein Element sowohl die Eigenschaften des ersten Elements als auch die Eigenschaften des zweiten Elements aufweisen. Dies würde einer Lageranordnung mit einem Paar Koppelelemente, welche sich sowohl in der Querrichtung als auch in der Hochrichtung erstrecken und damit als kombiniertes erstes und zweites Koppelelement fungieren, entsprechen. Durch das Vorsehen eines Paars Koppelelemente in der Querrichtung zur Lagerung von einer der Hauptlagereinheit und der Hilfslagereinheit können für die eine der Hauptlagereinheit und der Hilfslagereinheit sowohl eine Verschiebung in der Querrichtung als auch eine Rotation, die nicht in einer Ebene mit den Koppelelementen liegt, gesperrt werden. Damit können Reaktionskräfte der einen der Hauptlagereinheit und der Hilfslagereinheit, die aufgrund eines Giermoments an der Rotorwelle entstehen, effektiv abgestützt werden. In einer Ausgestaltung können sowohl die Hauptlagereinheit als auch die Hilfslagereinheit über jeweils ein Paar erster Koppelelemente gelagert sein.

In einer Ausführungsform ist eines der ersten Koppelelemente an einem unteren Endabschnitt der einen der Hauptlagereinheit und der Hilfslagereinheit drehbar gelagert. Dadurch kann das erste Koppelelement Kräfte in der Querrichtung effektiv aufnehmen und auf kurzem Wege in die Grundplatte einleiten. In einer Ausgestaltung können beide der ersten Koppelelemente auf diese Weise gelagert sein.

In einer Ausführungsform ist eine der Hauptlagereinheit und der Hilfslagereinheit über ein Paar zweiter Koppelelemente, welche in einer zu der Rotorwellenachse senkrechten Ebene auf gegenüberliegenden Seiten der Rotorwellenachse angeordnet sind und in der Hochrichtung verlaufen, an der Grundplatte gelagert. Damit können für die eine der Hauptlagereinheit und der Hilfslagereinheit sowohl eine Verschiebung in der Hochrichtung als auch eine Rotation um die Rotorwellenachse gesperrt werden. Daher können Kräfte in der Hochrichtung und auch Reaktionskräfte aus dem Torsionsmoment der Rotorwelle effektiv abgestützt werden. In einer Ausgestaltung können die zweiten Koppelelemente dazu ausgebildet sein, auch einen zweiten Freiheitsgrad zu sperren. Beispielsweise können die zweiten Koppelelemente über ein Drehgelenk gelagert sein, um auch eine Verschiebung in Richtung der Rotorwellenachse zu sperren. In einer Ausgestaltung können sowohl die Hauptlagereinheit als auch die Hilfslagereinheit über jeweils ein Paar zweiter Koppelelemente gelagert sein.

In einer Ausführungsform ist eines der zweiten Koppelelemente an einem Ort, welcher eine Anbringungsfläche der Grundplatte an den Turm in der Hochrichtung überlagert, an der Grundplatte gelagert. Die Anbringungsfläche kann beispielsweise eine Kontaktfläche der Grundplatte zu dem Turm oder dem Gierlager sein. Die Anbringungsfläche kann im Wesentlichen der Fläche einer oberseitigen Wand des Turms entsprechen. Durch den Aufbau dieser Ausführungsform kann das zweite Koppelelement Kräfte in der Hochrichtung effektiv aufnehmen und auf kurzem Wege über die Grundplatte in den Turm einleiten. In einer Ausgestaltung können beide der zweiten Koppelelemente auf diese Weise gelagert sein.

In einer Ausführungsform ist eine der Hauptlagereinheit und der Hilfslagereinheit über ein Paar dritter Koppelelemente, welche auf gegenüberliegenden Seiten der Rotorwellenachse angeordnet sind und in Richtung der Rotorwellenachse verlaufen, an der Grundplatte gelagert. Damit können für die eine der Hauptlagereinheit und der Hilfslagereinheit sowohl eine Verschiebung in Richtung der Rotorwellenachse als auch eine Rotation um eine in der Querrichtung verlaufende Achse gesperrt werden. Damit können durch die axialen Kräfte der Rotorwelle und ein Nickmoment an der Rotorwelle herbeigeführte Reaktionskräfte der einen der Hauptlagereinheit und der Hilfslagereinheit effektiv abgestützt werden. In einer Ausgestaltung kann nur die Hilfslagereinheit axiale Kräfte der Rotorwelle aufnehmen und über ein Paar dritter Koppelelemente abstützen. In einer Ausgestaltung kann nur die Hauptlagereinheit axiale Kräfte der Rotorwelle aufnehmen und über ein Paar dritter Koppelelemente abstützen. In einer Ausgestaltung können sowohl die Hauptlagereinheit als auch die Hilfslagereinheit axiale Kräfte der Rotorwelle teilweise aufnehmen. In einer derartigen Ausgestaltung können die Hauptlagereinheit und die Hilfslagereinheit die jeweiligen axialen Kräfte beispielsweise über jeweils ein Paar dritter Koppelelemente abstützen.

In einer Ausführungsform ist eines der dritten Koppelelemente an einem Endabschnitt in der Hochrichtung der einen der Hauptlagereinheit und der Hilfslagereinheit drehbar gelagert. In einer Ausgestaltung können beide dritten Koppelelemente an einem Endabschnitt in der Hochrichtung gelagert sein. Beispielsweise kann eines der dritten Koppelelemente an einem oberen Endabschnitt und das andere der dritten Koppelelemente an einem unteren Endabschnitt drehbar gelagert sein. Damit wird eine effektive Abstützung des Nickmoments gewährleistet.

In einer Ausführungsform ist jedes der dritten Koppelelemente über ein Stützelement an der Grundplatte gelagert. Das Stützelement ist um eine erste Achse relativ zu der Grundplatte drehbar. Das Lagergehäuse ist um eine zweite Achse relativ zu dem Stützelement drehbar. Die erste Achse und die zweite Achse sind zueinander senkrecht. Somit wird aus kinematischer Sicht eine kardanische Aufhängung zum Lagern der Hilfslagereinheit über das Stützelement an der Grundplatte bereitgestellt. Die kardanische Aufhängung erlaubt eine freie Rotation des Lagergehäuses um die zwei Achsen. Damit kann das Lagergehäuse der Biegung der Rotorwelle folgen, ohne weitere Reaktionskräfte zu erzeugen.

In einer Ausführungsform ist das Stützelement über mindestens eines von einem lateralen Koppelelement, einem vertikalen Koppelelement und einem schrägen Koppelelement an der Grundplatte gelagert. Das laterale Koppelelement kann sich in der Querrichtung erstrecken. Das vertikale Koppelelement kann sich in der Hochrichtung erstrecken. Das schräge Koppelelement kann sich in einer Richtung erstrecken, welche Komponenten in der Richtung der Rotorwellenachse, der Querrichtung und der Hochrichtung hat. Diese Ausführungsform stellt eine einfache Lagerung des Stützelements bereit. In einer Ausgestaltung können alle des lateralen Koppelelements, des vertikalen Koppelelements und des schrägen Koppelelements vorgesehen sein. Damit kann auf einfache Weise ein ortsfestes Stützelement bereitgestellt werden. In einer Ausgestaltung kann das vertikale Koppelelement über eine weitere Stützstruktur an der Grundplatte gelagert sein. In einer Ausgestaltung kann das Lagergehäuse über ein weiteres Koppelelement an der weiteren Stützstruktur gelagert sein. Das weitere Koppelelement kann sich in der Hochrichtung hin zu der weiteren Stützstruktur erstrecken. Somit kann das weitere Koppelelement eine weitere Abstützung des Lagergehäuses gegen eine Durchbiegung der Rotorwelle sowie gegen eine Gewichtskraft von in dem Lagergehäuse aufgenommenen Massen bereitstellen. In einer Ausgestaltung kann die Steifigkeit des weiteren Koppelelements derart eingestellt sein, dass parasitäre Kräfte, welche sich in Radsätzen des Getriebes und/oder des Generators etwa durch die Gewichtskraft einstellen, eliminiert werden.

In einer Ausführungsform ist eines der Koppelelemente als ein Aktuator zum Beeinflussen einer Ausrichtung der Rotorwelle ausgebildet. Beispielsweise kann ein Koppelelement, welches außerhalb einer Gierachse der Rotorwelle drehbar an der Hauptlagereinheit gelagert ist und in der Querrichtung verläuft, als ein Aktuator ausgebildet sein. In diesem Fall bewirkt eine Längenänderung des Koppelelements eine Verschiebung der Hauptlagereinheit in der Querrichtung, die einer Umfangsrichtung der Gierachse entspricht. Folglich führt die Rotorwelle eine Gierbewegung um die Gierachse aus, und ihre Ausrichtung relativ zu der Grundplatte ändert sich. In einer Ausgestaltung können mehrere Koppelelemente, beispielsweise zwei Koppelelemente eines Paares, als Aktuatoren ausgebildet sein. In einer Ausgestaltung können alle Koppelelemente als Aktuatoren ausgebildet sein.

In einer Ausführungsform ist eines der Koppelelemente zwischen seinen Enden elektrisch isolierend ausgebildet. Damit kann eine Übertragung unerwünschter Ströme, beispielsweise Kriechströme, von dem Triebstrang über das Koppelelement in die Grundplatte vermieden werden. Zudem kann eine mechanische Schwächung oder Beschädigung des Koppelelements durch einen sehr hohen Strom, beispielsweise durch einen Blitzeinschlag, vermieden werden. In einer Ausgestaltung können mehrere Koppelelemente, beispielsweise zwei Koppelelemente eines Paares, elektrisch isolierend ausgebildet sein. In einer Ausgestaltung können alle Koppelelemente elektrisch isolierend ausgebildet sein.

Ein zweiter Aspekt der vorliegenden Offenbarung betrifft eine Windkraftanlage mit der Lageranordnung gemäß dem ersten Aspekt. Die Windkraftanlage kann beispielsweise zur Stromerzeugung ausgebildet sein. Die Windkraftanlage weist einen Triebstrang, einen Turm und die Lageranordnung des ersten Aspekts auf. Die Lageranordnung ist an einer Spitze des Turms angebracht. Beispielsweise kann eine Grundplatte der Lageranordnung über ein Gierlager an der Spitze des Turms angebracht sein. Jeweilige Vorteile und weitere Merkmale sind der Beschreibung des ersten Aspekts zu entnehmen, wobei Ausgestaltungen des ersten Aspekts auch Ausgestaltungen des zweiten Aspekts und umgekehrt bilden.

In einer Ausführungsform ist eines der zweiten Koppelelemente an einem Ort, welcher eine spitzenseitige Wand des Turms in der Hochrichtung überlappt, an der Grundplatte gelagert. Dadurch werden Kräfte von der Hauptlagereinheit und/oder der Hilfslagereinheit auf kurzem Weg und mit hoher Steifigkeit in den Turm eingeleitet. Somit werden durch einen einfachen Aufbau der Materialeinsatz und das Gewicht minimiert.

In einer Ausführungsform weist der Triebstrang einen Rotor mit mindestens zwei Rotorblättern und einem Generator auf. Der Rotor ist über die Rotorwelle mit dem Generator mechanisch wirkverbunden. In einer Ausführungsform weist der Triebstrang ein Getriebe auf, das in einem Drehmomentfluss zwischen der Rotorwelle und dem Generator angeordnet ist.

### Kurze Beschreibung der Figuren

Fig. 1 zeigt schematisch eine Windkraftanlage mit einem Triebstrang.
Fig. 2 veranschaulicht ein Grundprinzip zum Abstützen von Kräften und Momenten der Windkraftanlage von Fig. 1.
Fig. 3 veranschaulicht eine Durchbiegung einer Rotorwelle der Windkraftanlage von Fig. 1.
Fig. 4 zeigt schematisch eine Lageranordnung gemäß einer ersten Ausführungsform der vorliegenden Offenbarung in einer perspektivischen Ansicht.
Fig. 5 zeigt schematisch Koppelelemente der Lageranordnung von Fig. 4.
Fig. 6 zeigt schematisch eine Lageranordnung gemäß einer zweiten Ausführungsform der vorliegenden Offenbarung in einer perspektivischen Ansicht.
Fig. 7 veranschaulicht ein kinematisches Verhalten eines als Stablenker ausgebildeten Koppelelements.

### Detaillierte Beschreibung von Ausführungsformen

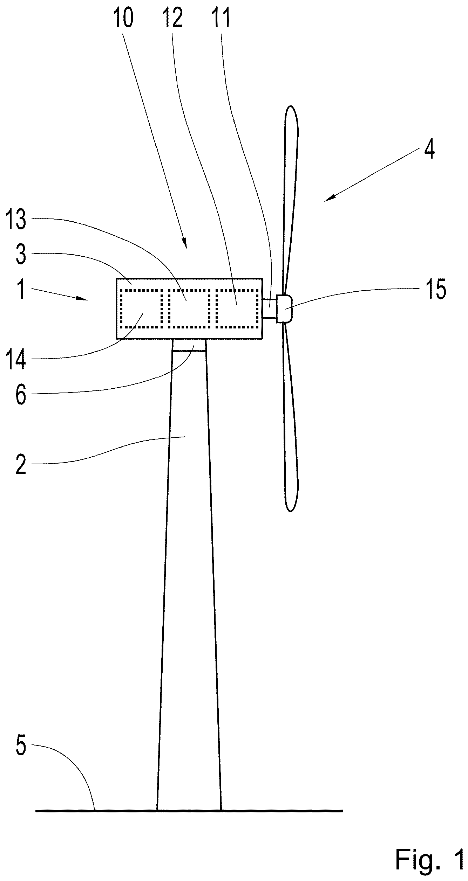

Fig. 1 veranschaulicht schematisch eine Windkraftanlage 1 in Horizontalbauweise. Die Windkraftanlage 1 weist eine Gondel 3 auf, welche über ein Gierlager 6 drehbar an einem oberen Ende eines Turms 2 befestigt ist. Ein unteres Ende des Turms 2 ist an einem Boden 5 verankert. In der Gondel 3 ist ein Triebstrang 10 aufgenommen, welcher eine Rotorwelle 11, ein Getriebe 12, einen Generator 13, Hilfsaggregate 14 und eine Nabe 15 aufweist. Ein Rotor 4 der Windkraftanlage 1 ist über die Nabe 15, die Rotorwelle 11 und das Getriebe 12 mit dem Generator 13 mechanisch wirkverbunden. Die Hilfsaggregate 14 können Einrichtungen zur Temperierung des Triebstrangs 10, Einrichtungen zum Wandeln von elektrischer Leistung, Einrichtungen zur Verstellung der Nabe 15 sowie Einrichtungen zum Ausrichten der Gondel 3 über das Gierlager 6 umfassen. Die Windkraftanlage 1 weist ferner eine Lageranordnung zum Lagern von Teilen des Triebstrangs 10 auf.

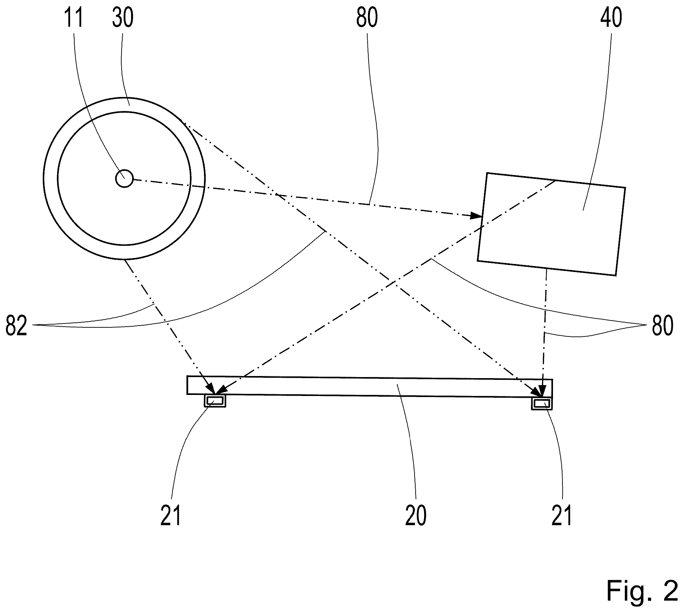

Fig. 2 veranschaulicht ein Grundprinzip zum Abstützen von Kräften und Momenten der Windkraftanlage 1. Die Windkraftanlage 1 weist den Triebstrang 10 mit der Rotorwelle 11 auf. Über den Rotor 4 werden Kräfte und Momente auf die Rotorwelle 11 aufgebracht. Diese Kräfte und Momente können beispielsweise ein Torsionsmoment um eine Rotorwellenachse 70 der Rotorwelle 11 sowie sonstige Rotorwellenlasten umfassen. Die sonstigen Rotorwellenlasten können beispielsweise axiale und radiale Kräfte sowie Momente um eine Gierachse und um eine Querachse umfassen. Die vorliegende Offenbarung sieht vor, zur Lagerung dieser Kräfte und Momente zwei separate Pfade zur Abstützung bereitzustellen, was in Fig. 2 als Prinzipskizze veranschaulicht ist. Die Rotorwelle 11 ist in einer Hauptlagereinheit 30 gelagert. Die Hauptlagereinheit 30 ist ausgebildet, mindestens eine Rotation der Rotorwelle 11 frei zuzulassen und manche oder alle der sonstigen Rotorwellenlasten aufzunehmen. Die von der Hauptlagereinheit 30 aufgenommenen sonstigen Rotorwellenlasten werden über eine Abstützung 82 in eine Grundplatte 20 eingeleitet, welche über ein oder mehrere Grundplattenlager 21 an dem Turm 2 angebracht ist. Das Torsionsmoment von der Rotorwelle 11 wird hingegen an einer Hilfslagereinheit 40 abgestützt. Die Hilfslagereinheit 40 ist zur Übertragung des Torsionsmoments an der Grundplatte 20 abgestützt, so dass eine Abstützung 80 des Torsionsmoments über die Hilfslagereinheit 40 und die Grundplatte 20 an den Grundplattenlagern 21 erfolgt. Durch dieses Grundprinzip wird eine Trennung der Pfade zur Abstützung des Torsionsmoments und der sonstigen Rotorwellenlasten bereitgestellt. Es ist zu beachten, dass manche der sonstigen Rotorwellenlasten ebenfalls über die Hilfslagereinheit 40 an der Grundplatte 20 abgestützt werden können. Ein Beispiel für eine derartige Abstützung wird später mit Bezug auf die Ausführungsformen beschrieben.

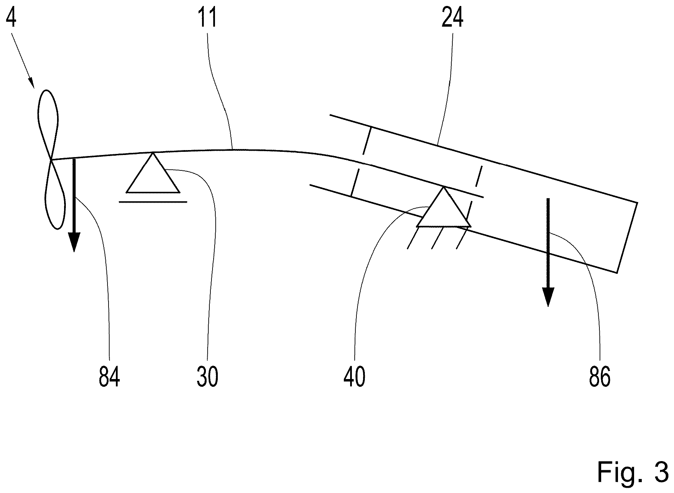

Fig. 3 veranschaulicht eine Durchbiegung der Rotorwelle 11 der Windkraftanlage 1. Die Rotorwelle 11 ist auf der Seite des Rotors 4 durch die Hauptlagereinheit 30 gelagert, was hier lediglich schematisch dargestellt ist. Auf der Seite eines Lagergehäuses 24, in welchem Teile des Triebstrangs aufgenommen sind, ist die Rotorwelle 11 über die Hilfslagereinheit 40 gelagert, was hier lediglich schematisch dargestellt ist. Unter dem Einfluss der Schwerkraft wirken auf der Rotorwelle 11 eine Gewichtskraft 84 des Rotors 4 und eine Gewichtskraft 86 des Lagergehäuses 24 und der darin aufgenommenen Teile. Unter dem Einfluss dieser Gewichtskräfte 84, 86 kann sich die Rotorwelle 11 in Richtung der Schwerkraft durchbiegen, was in Fig. 3 überzeichnet dargestellt ist. Die vorliegende Offenbarung sieht vor, durch die später ausführlich beschriebene Lageranordnung der Ausführungsformen dem Lagergehäuse 24 zu ermöglichen, der Durchbiegung der Welle 11 zu folgen, um somit abzustützende Reaktionskräfte zu reduzieren.

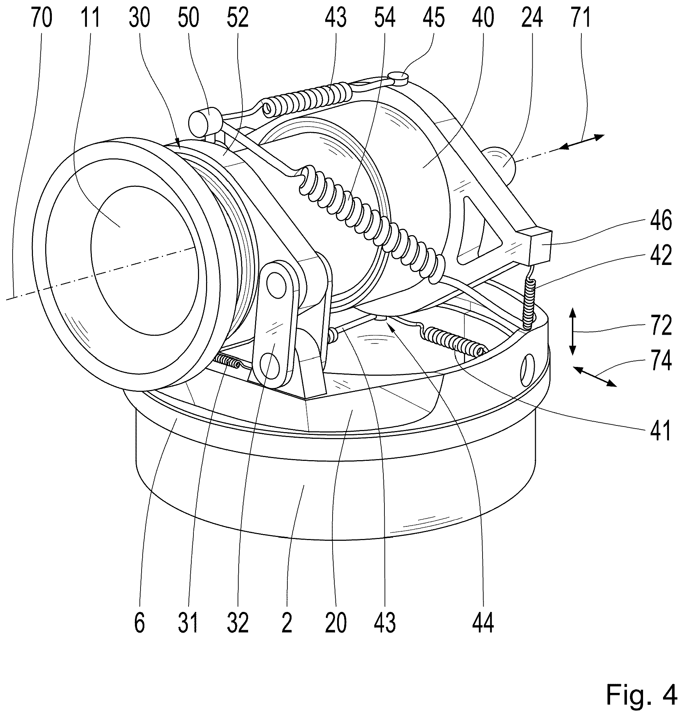

Fig. 4 zeigt schematisch eine Lageranordnung für die Windkraftanlage 1 von Fig. 1. Die Lageranordnung weist eine Grundplatte 20 auf, welche über das Gierlager 6 an dem Turm 2 angebracht ist. Genauer gesagt ist die Grundplatte über eine untere Anbringungsfläche an dem Gierlager 6 gefügt. Die Anbringungsfläche befindet sich zwischen dem Gierlager 6 und der Grundplatte 20 und ist in der Figur nicht sichtbar. Die Anbringungsfläche entspricht im Wesentlichen der Fläche einer oberseitigen Wand des Turms 2.

Die Lageranordnung weist eine Hauptlagereinheit 30, eine Hilfslagereinheit 40 und ein Lagergehäuse 24 auf. Die Hauptlagereinheit 30 ist zum drehbaren Lagern der Rotorwelle 11 ausgebildet. Die Hauptlagereinheit 30 ist ferner zum Abstützen von radialen Kräften und Giermomenten der Rotorwelle 11 ausgebildet. Dabei beziehen sich die radialen Kräfte auf Kräfte radial zu einer Richtung 71 einer Rotorwellenachse 70. Mit Bezug auf die Hauptlagereinheit 30 weisen die radialen Kräfte der Rotorwelle 11 Komponenten in einer Querrichtung 74 und in einer Hochrichtung 72. Die Querrichtung 74 ist eine Richtung, welche senkrecht zu der Rotorwellenachse 70 beziehungsweise zu der Richtung 71 verläuft. Die Hochrichtung 72 ist eine Richtung, welche senkrecht zu der Rotorwellenachse 70 beziehungsweise der Richtung 71 und senkrecht zu der Querrichtung 74 verläuft. Ein Giermoment ist ein Moment um eine Gierachse, welche in der Hochrichtung 72 verläuft. Die Hauptlagereinheit 30 ist über Koppelelemente 31, 32, welche später beschrieben werden, an der Grundplatte 20 gelagert.

Die Hilfslagereinheit 40 ist zum Abstützen des Lagergehäuses 24 ausgebildet. Das Lagergehäuse 24 ist vorliegend dazu ausgebildet, das Getriebe 12, den Generator 13 und die Hilfsaggregate 14 des Triebstrangs 10 aufzunehmen und abzustützen. Die Reaktionskräfte von der Lagerung des Getriebes 12, des Generators 13 und der Hilfsaggregate 14 werden über das Lagergehäuse 24 in die Hilfslagereinheit 40 eingeleitet. Hierzu ist das Lagergehäuse 24 an der Hilfslagereinheit 40 befestigt, vorliegend verschraubt. In Fig. 4 ist das Lagergehäuse 24 lediglich als Punktmasse vereinfacht dargestellt. Die Hilfslagereinheit 40 ist über später beschriebene Koppelelemente 41, 42, 43 an der Grundplatte 20 gelagert.

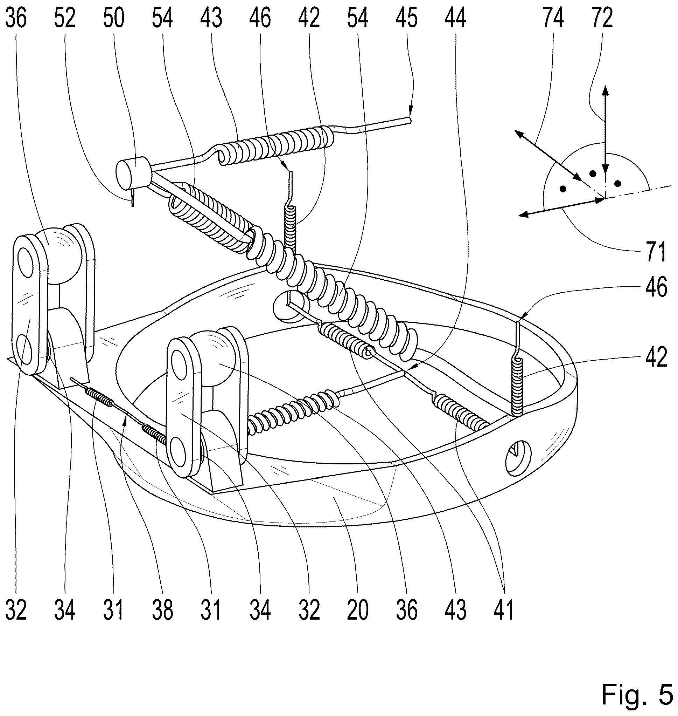

Bei der vorliegenden ersten Ausführungsform ist eine Baugruppe mit der Rotorwelle 11, der Hauptlagereinheit 30 und der Hilfslagereinheit 40 mit Bezug auf allen Freiheitsgraden über die Koppelelemente 31, 32, 41, 42, 43 an der Grundplatte 20 gelagert. Dies wird nun mit Verweis auf Fig. 4 und Fig. 5 beschrieben. Die Lageranordnung weist zwei erste Koppelelemente 31 der Hauptlagereinheit 30 auf. Die zwei ersten Koppelelemente 31 der Hauptlagereinheit 30 erstrecken sich von einem unteren Endabschnitt der Hauptlagereinheit 30 in entgegengesetzten Richtungen entlang der Querrichtung 74. Ein hauptlagereinheitsnahes Ende von jedem der ersten Koppelelemente 31 der Hauptlagereinheit 30 ist an einem unteren Endabschnitt 38 der Hauptlagereinheit 30 drehbar gelagert (s. Fig. 5). Vorliegend erfolgt die Lagerung über ein Kugelgelenk. Ein hauptlagereinheitsfernes Ende von jedem der ersten Koppelelemente 31 der Hauptlagereinheit 30 ist an der Grundplatte 20 drehbar gelagert, vorliegend über ein Kugelgelenk. Somit sind die zwei ersten Koppelelemente 31 der Hauptlagereinheit 30 in der Lage, Kräfte in der Querrichtung 74 von der Hauptlagereinheit 30 in die Grundplatte 20 einzuleiten.

Die Lageranordnung weist zwei zweite Koppelelemente 32 der Hauptlagereinheit 30 auf. Die zwei zweiten Koppelelemente 32 der Hauptlagereinheit 30 sind auf gleicher Höhe der Rotorwellenachse 70, das heißt in einer Ebene senkrecht zu der Rotorwellenachse 70, angeordnet. Die zwei zweiten Koppelelemente 32 der Hauptlagereinheit 30 erstrecken sich in der Hochrichtung 72. Ein grundplattennahes Ende, nämlich ein unteres Ende in Fig. 5, von jedem der zwei zweiten Koppelelemente 32 der Hauptlagereinheit 30 ist mit einem Drehgelenk 34 an der Grundplatte 20 drehbar gelagert. Ein grundplattenfernes Ende, nämlich ein oberes Ende in Fig. 5, von jedem der zweiten Koppelelemente 32 der Hauptlagereinheit 30 ist über ein Kugelgelenk 36 (s. Fig. 5) an der Hauptlagereinheit 30 drehbar gelagert. Somit sind die zwei zweiten Koppelelemente 32 der Hauptlagereinheit 30 in der Lage, Kräfte in der Hochrichtung 72 von der Hauptlagereinheit 30 in die Grundplatte 20 einzuleiten. Da das jeweilige grundplattennahe Ende von den zwei Koppelelementen 32 der Hauptlagereinheit 30 mit dem Drehgelenk 34 an der Grundplatte 20 gelagert ist, sind die zwei zweiten Koppelelemente 32 der Hauptlagereinheit 30 ferner in der Lage, axiale Kräfte von der Hauptlagereinheit 30 in die Grundplatte 20 einzuleiten. Es sei angemerkt, dass die Steifigkeit der zwei zweiten Koppelelemente 32 der Hauptlagereinheit 30 in ihrer jeweiligen Längsrichtung, nämlich der Hochrichtung 72, deutlich geringer ist als ihre Steifigkeit in ihrer Längsrichtung, da sie als Stablenker ausgebildet sind. Somit ist die Steifigkeit zur Aufnahme von axialen Kräften in Richtung der Rotorwellenachse 70 geringer als diejenige zur Aufnahme von Kräften in der Hochrichtung 72. Jedoch ist bei der Lageranordnung der ersten Ausführungsform keine hohe Steifigkeit in Richtung 71 der Rotorwellenachse 70 erforderlich, da die Hauptlagereinheit 30 keine wesentlichen axialen Kräfte von der Rotorwelle 11 aufnimmt.

Die Lageranordnung weist zwei erste Koppelelemente 41 der Hilfslagereinheit 40 auf. Die zwei ersten Koppelelemente 41 der Hilfslagereinheit 40 erstrecken sich von einem unteren Endabschnitt der Hilfslagereinheit 40 in entgegengesetzten Richtungen entlang der Querrichtung 74. Ein hilfslagereinheitsnahes Ende von jedem der ersten Koppelelemente 41 der Hilfslagereinheit 40 ist an einem unteren Endabschnitt 44 der Hilfslagereinheit 40 drehbar gelagert (s. Fig. 5). Vorliegend erfolgt die Lagerung über ein Kugelgelenk. Ein hilfslagereinheitsfernes Ende von jedem der ersten Koppelelemente 41 der Hilfslagereinheit 40 ist an der Grundplatte 20 drehbar gelagert, vorliegend über ein Kugelgelenk. Somit sind die zwei ersten Koppelelemente 41 der Hilfslagereinheit 40 in der Lage, Kräfte in der Querrichtung 74 von der Hilfslagereinheit 40 in die Grundplatte 20 einzuleiten.

Die Lageranordnung weist zwei zweite Koppelelemente 42 der Hilfslagereinheit 40 auf. Die zwei zweiten Koppelelemente 42 der Hilfslagereinheit 40 sind auf gleicher Höhe der Rotorwellenachse 70, das heißt in einer Ebene senkrecht zu der Rotorwellenachse 70, angeordnet. Die zwei zweiten Koppelelemente 42 der Hilfslagereinheit 40 erstrecken sich in der Hochrichtung 72. Ein grundplattennahes Ende, nämlich ein unteres Ende in Fig. 5, von jedem der zwei zweiten Koppelelemente 42 der Hilfslagereinheit 40 ist an der Grundplatte 20 drehbar gelagert, vorliegend über ein Kugelgelenk. Ein grundplattenfernes Ende, nämlich ein oberes Ende in Fig. 5, von jedem der zweiten Koppelelemente 42 der Hilfslagereinheit 40 ist an einem lateralen Endabschnitt 46 der Hilfslagereinheit 40 (s. Fig. 4) an der Hilfslagereinheit 40 drehbar gelagert, vorliegend über ein Kugelgelenk. Somit sind die zwei zweiten Koppelelemente 42 der Hilfslagereinheit 40 in der Lage, Kräfte in der Hochrichtung 72 von der Hilfslagereinheit 40 in die Grundplatte 20 einzuleiten.

Die Lageranordnung der ersten Ausführungsform weist zwei dritte Koppelelemente 43 der Hilfslagereinheit 40 auf. Die zwei dritten Koppelelemente 43 sind vorliegend in einer vertikalen Ebene angeordnet, welche normal zu der Querrichtung 74 ist und die Rotorachse 70 beinhaltet. Genauer gesagt sind die zwei dritten Koppelelemente 43 der Hilfslagereinheit 40 oberhalb und unterhalb der Rotorwellenachse angeordnet. Die zwei dritten Koppelelemente 43 der Hilfslagereinheit 40 verlaufen in der Richtung 71 der Rotorwellenachse 70. Ein hilfslagereinheitsnahes Ende von einem der zweiten Koppelelemente 43 der Hilfslagereinheit 40, nämlich das untere Koppelelement 43 in Fig. 5, ist an dem unteren Endabschnitt 44 der Hilfslagereinheit 40 drehbar gelagert, vorliegend über ein Kugelgelenk. Ein hilfslagereinheitsfernes Ende des einen zweiten Koppelelements 43 der Hilfslagereinheit 40 ist an der Grundplatte 20 drehbar gelagert, vorliegend über ein Kugelgelenk. Ein hilfslagereinheitsnahes Ende des anderen zweiten Koppelelements 43 der Hilfslagereinheit 40, nämlich des oberen zweiten Koppelelements 43, ist an einem oberen Endabschnitt 45 der Hilfslagereinheit 40 drehbar gelagert, vorliegend über ein Kugelgelenk. Ein hilfslagereinheitsfernes Ende des anderen zweiten Koppelelements 43 ist vorliegend an einem Stützelement 50 der Lageranordnung drehbar gelagert, vorliegend über ein Kugelgelenk. Somit sind bei der ersten Ausführungsform die zwei dritten Koppelelemente 43 der Hilfslagereinheit 40 in der Lage, axiale Kräfte der Rotorwelle 11 von der Hilfslagereinheit 40 in das Stützelement 50 einzuleiten.

Das Stützelement 50 ist mit Bezug auf Verschiebungen in der Richtung 71 der Rotorwellenachse 70 und in der Querrichtung 74 über zwei schräge Koppelelemente 54 gelagert. Die schrägen Koppelelemente 54 erstrecken sich in einer Richtung, die Komponenten in der Richtung 71 der Rotorwellenachse 70, der Querrichtung 74 und der Hochrichtung 72 hat. Die schrägen Koppelelemente 54 sind an beiden Enden drehbar gelagert, vorliegend über Kugelgelenke. Das Stützelement 50 ist mit Bezug auf vertikale Verschiebungen über ein vertikales Koppelelement 52 gelagert. Das vertikale Koppelelement 52 erstreckt sich in der Hochrichtung 72 von dem Stützelement 50 zu der Hauptlagereinheit 30. Beide Enden des vertikalen Koppelelements 52 sind drehbar gelagert, vorliegend über Kugelgelenke. Durch das vertikale Koppelelement 52 und die schrägen Koppelelemente 54 ist das Stützelement 50 ortsfest gelagert. Daher kann das Stützelement 50 als ein ortsfester Stützpunkt für ein Ende des zweiten Koppelelements 43 der Hilfslagereinheit 40 fungieren.

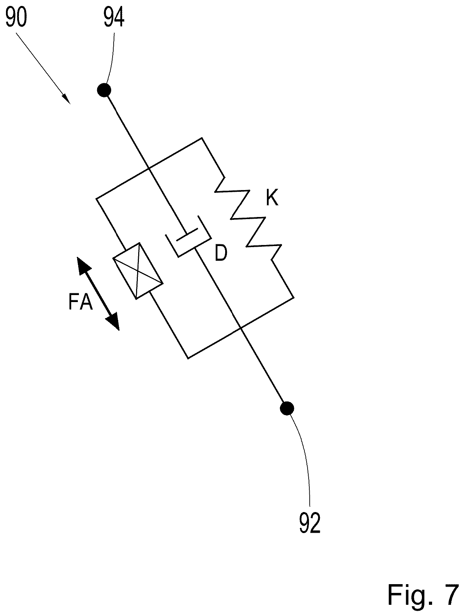

Jedes der vorangehend beschriebenen Koppelelemente 31, 32, 41, 42, 43, 52, 54 ist vorliegend als ein Stablenker ausgebildet. Anhand Fig. 7 wird nun das kinematische Verhalten eines solchen Stablenkers 90 erläutert. Der Stablenker 90 ist ein längliches Element und weist ein erstes Ende 92 und ein zweites Ende 94 auf. Der Stablenker 90 erstreckt sich von dem ersten Ende 92 zu dem zweiten Ende 94 in seiner Längsrichtung. Wird eines der Enden festgehalten, bestimmt die Länge des Stablenkers 90 eine Führungskurve für das andere Ende. Werden beide Enden 90, 92 mit Bezug auf drei rotatorische Freiheitsgrade drehbar gelagert, so kann der Stablenker 90 lediglich einen translatorischen Freiheitsgrad in seiner Längsrichtung sperren; alle anderen Freiheitsgrade sind frei. Somit ist ein in ein kinematisches System eingesetzter Stablenker 90 in der Lage, einen Freiheitsgrad des kinematischen Systems zu sperren. In einem realen kinematischen System ist der Stablenker 90 nicht ideal starr, sondern weist eine Steifigkeit K auf. Der Stablenker 90 weist optional einen Dämpfungsgrad D und eine Aktuatorkraft FA auf. Der Dämpfungsgrad D kann über Dämpfungselemente bereitgestellt werden und dazu dienen, Schwingungen zu unterdrücken. Die Aktuatorkraft FA kann über einen Aktuator bereitgestellt werden und dazu dienen, über eine Längenänderung des Stablenkers 90 eine Bewegung in dem kinematischen System herbeizuführen.

In der Lageranordnung gemäß der ersten Ausführungsform sind insgesamt fünf Paare von Koppelelementen vorgesehen. Die zwei ersten Koppelelemente 31 der Hauptlagereinheit 30 sind aufgrund ihrer Drehgelenk-Lagerung in der Lage, einen zusätzlichen Freiheitsgrad zu sperren. Somit können die zwei ersten Koppelelemente 31 der Hauptlagereinheit 30 insgesamt vier Freiheitsgrade des Systems sperren. Die zwei zweiten Koppelelemente 32 der Hauptlagereinheit 30 sowie die zwei ersten Koppelelemente 41, die zwei zweiten Koppelelemente 42 und die zwei dritten Koppelelemente 43 der Hilfslagereinheit 40 sind beidseitig über Kugelgelenke gelagert und somit in der Lage, jeweils einen Freiheitsgrad zu sperren. Zusammenfassend werden daher vier Freiheitsgrade durch die zwei ersten Koppelelemente 31 und acht Freiheitsgrade durch die restlichen Koppelelemente 32, 41, 42, 43 gesperrt. Das kinematische System mit der Hauptlagereinheit 30 und der Hilfslagereinheit 40 weist ebenfalls insgesamt zwölf Freiheitsgrade auf, nämlich jeweils drei translatorische und drei rotatorische pro Lagereinheit 30, 40. Damit ist das kinematische System gemäß der ersten Ausführungsform statisch bestimmt.

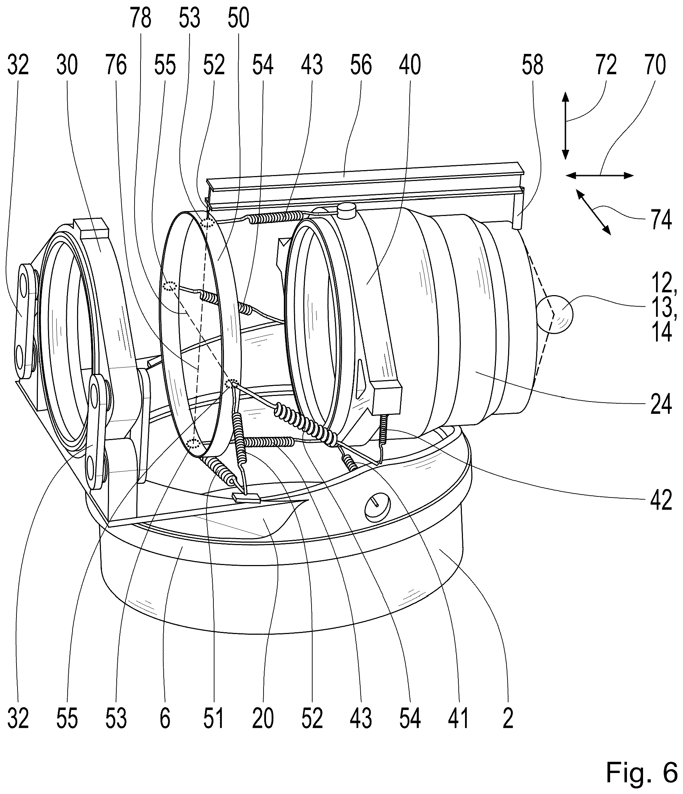

Fig. 6 zeigt schematisch eine Lageranordnung gemäß einer zweiten Ausführungsform. Es werden lediglich Unterschiede zu der ersten Ausführungsform von Fig. 4 und 5 erläutert. Das Stützelement 50 ist vorliegend als ein ringförmiges Bauteil ausgebildet, welches die Rotorwelle 11 umgibt. Das Stützelement 50 ist um eine erste Achse 76 relativ zu der Grundplatte 20 drehbar gelagert. Die Hilfslagereinheit 40 ist um eine zweite Achse 78, welche vorliegend in der Querrichtung 74 verläuft, relativ zu dem Stützelement 50 drehbar gelagert. Die erste Achse und die zweite Achse sind senkrecht zueinander. Somit wird aus kinematischer Sicht eine kardanische Aufhängung zum Lagern der Hilfslagereinheit 40 über das Stützelement 50 an der Grundplatte 20 bereitgestellt.

Vorliegend verläuft die erste Achse 76 in der Hochrichtung 72, und die zweite Achse 78 verläuft in der Querrichtung 74. Die erste Achse 76 verläuft zwischen zwei ersten Koppelpunkten 53. Die zwei ersten Koppelpunkte 53 sind an einem unteren Endabschnitt und einem oberen Endabschnitt des Stützelements 50 angeordnet. Die Lageranordnung weist zwei laterale Koppelelemente 51 auf, welche sich in entgegengesetzten Richtungen in der Querrichtung 74 erstrecken. Die lateralen Koppelelemente 51 sind als Stablenker ausgebildet. Ein Ende von jedem der zwei lateralen Koppelelemente 51 ist an einem der ersten Koppelpunkte 53, nämlich dem unteren in Fig. 6, drehbar gelagert. Das andere Ende von jedem der lateralen Koppelelemente 51 ist an der Grundplatte 20 drehbar gelagert, vorliegend über ein Kugelgelenk. Der andere erste Koppelpunkt 53 ist über ein vertikales Koppelelement 52 an einer Stützstruktur 56 gelagert. Die Stützstruktur 56 ist ortsfest mit Bezug auf die Grundplatte 20 gelagert (nicht dargestellt). Das vertikale Koppelelement 52 ist als Stablenker ausgebildet und erstreckt sich in der Hochrichtung 72. Ein Ende des vertikalen Koppelelements 52 ist an dem anderen zweiten Koppelpunkt 53 drehbar gelagert, vorliegend über ein Kugelgelenk. Das andere Ende des vertikalen Koppelelements 52 ist an der Stützstruktur 56 drehbar gelagert, vorliegend über ein Kugelgelenk.

Die zweite Achse 78 verläuft zwischen zwei zweiten Koppelpunkten 55. Die zwei zweiten Koppelpunkte 55 sind jeweils an lateralen Endabschnitten des Stützelements 50 angeordnet. Zwei weitere vertikale Koppelelemente 52 verbinden die zwei zweiten Koppelpunkte 55 mit der Grundplatte 20. Die zwei weiteren vertikalen Koppelelemente 52 sind in einer zu der Rotorwellenachse senkrechten Ebene angeordnet und verlaufen in der Hochrichtung 72. Die zwei weiteren vertikalen Koppelelemente 52 sind als Stablenker ausgebildet. Ein Ende von jedem der zwei weiteren vertikalen Koppelelemente 52 ist jeweils an einem zweiten Koppelpunkt 55 an dem Stützelement 50 drehbar gelagert, vorliegend über ein Kugelgelenk. Das jeweils andere Ende von jedem der zwei weiteren vertikalen Koppelelemente 52 ist an der Grundplatte 20 drehbar gelagert, vorliegend über ein Kugelgelenk.

Das Stützelement 50 ist ferner über zwei schräge Koppelelemente 54 der Lageranordnung gelagert. Die zwei schrägen Koppelelemente 54 verlaufen in einer Richtung, die sowohl in der Richtung 71 der Rotorwellenachse 70 als auch in der Hochrichtung 72 und Querrichtung 74 Komponenten hat. Ein Ende von jedem schrägen Koppelelement ist an einem jeweiligen zweiten Koppelpunkt 54 drehbar gelagert, vorliegend über ein Kugelgelenk. Das andere Ende ist an der Grundplatte 20 drehbar gelagert, vorliegend über ein Kugelgelenk.

In Fig. 6 ist das Lagergehäuse 24 schematisch gezeigt. Die darin aufgenommenen Teile des Triebstrangs 10, nämlich das Getriebe 12, der Generator 13 und die Hilfsaggregate 14, sind als Punktmasse gezeigt, welche mit dem Lagergehäuse 24 kinematisch gekoppelt ist. Das Lagergehäuse 24 ist über ein weiteres Koppelelement 58 an der Stützstruktur 56 gelagert. Das weitere Koppelelement 58 erstreckt sich von einem hilfslagereinheitsfernen Endabschnitt des Lagergehäuses 24, welcher zugleich auch ein oberer Endabschnitt ist, in der Hochrichtung zu der Stützstruktur 56. Somit stellt das weitere Koppelelement 58 eine weitere Abstützung des Lagergehäuses 24 gegen die Durchbiegung der Rotorwelle 11 sowie gegen eine Gewichtskraft der in dem Lagergehäuse 24 aufgenommenen Massen bereit. Zudem ist die Steifigkeit des weiteren Koppelelements 58 vorliegend derart eingestellt, dass parasitäre Kräfte eliminiert werden, welche sich in Radsätzen, vorliegend Planetenstufen, des Getriebes 12 durch die Gewichtskraft einstellen.

Mit der Lagerung des Stützelements 50 gemäß der zweiten Ausführungsform wird eine kardanische Aufhängung der Hilfslagereinheit 40 über das Stützelement 50 an der Grundplatte 20 bereitgestellt. Somit ist die Hilfslagereinheit 40 in der Lage, um zwei Achsen zu rotieren, um der Durchbiegung der Rotorwelle 11 zu folgen.

In einer weiteren Ausführungsform, die nicht dargestellt ist, ist anstelle der Hilfslagereinheit 40, wie bei der ersten Ausführungsform von Fig. 4 und 5, die Hauptlagereinheit 30 mit zwei dritten Koppelelementen 43 versehen. Ferner ist die Hauptlagereinheit 30 ausgebildet, axiale Kräfte der Rotorwelle 11 aufzunehmen. Die Ausführungen zu Lageranordnung der ersten Ausführungsform mit ihren zwei dritten Koppelelementen 43 der Hilfslagereinheit 40 gelten analog, wobei alle Erwähnungen von "Hilfslagereinheit 40", "hilfslagereinheitsnah" und "hilfslagereinheitsfern" im Kontext der dritten Koppelelemente 43 jeweils durch "Hauptlagereinheit 30", "hauptlagereinheitsnah" und "hauptlagereinheitsfern" zu ersetzen sind. Somit sind bei der vorliegenden Ausführungsform die zwei dritten Koppelelemente 43 der Hauptlagereinheit 30 in der Lage, axiale Kräfte der Rotorwelle 11 von der Hauptlagereinheit 30 in das Stützelement 50 einzuleiten.

### Bezugszeichen

- 1: Windkraftanlage
- 2: Turm
- 3: Gondel
- 4: Rotor
- 5: Boden
- 6: Gierlager
- 10: Triebstrang
- 11: Rotorwelle
- 12: Getriebe
- 13: Generator
- 14: Hilfsaggregate
- 15: Nabe
- 20: Grundplatte
- 21: Grundplattenlager
- 24: Lagergehäuse
- 30: Hauptlagereinheit
- 31, 41: erstes Koppelelement
- 32, 42: zweites Koppelelement
- 34: Drehgelenk
- 40: Hilfslagereinheit
- 43: drittes Koppelelement
- 44, 47: unterer Endabschnitt
- 45: oberer Endabschnitt
- 46: lateraler Endabschnitt
- 50: Stützelement
- 51: laterales Koppelelement
- 52: vertikales Koppelelement
- 53: erster Koppelpunkt
- 54: schräges Koppelelement
- 55: zweiter Koppelpunkt
- 56: Stützstruktur
- 58: weiteres Koppelelement
- 70: Rotorwellenachse
- 71: Richtung der Rotorwellenachse
- 72: Hochrichtung
- 74: Querrichtung
- 76: erste Achse
- 78: zweite Achse
- 80: Abstützung Torsionsmoment
- 82: Abstützung sonstiger Rotorwellenlasten
- 84, 86: Gewichtskraft
- 90: Stablenker
- 92: erstes Ende
- 94: zweites Ende

## Patentansprüche

1. Lageranordnung für eine Windkraftanlage (1) zum Lagern eines Triebstrangs (10) an einem Turm (2) der Windkraftanlage (1), mit einer Grundplatte (20), welche an dem Turm (2) anbringbar ist, einer Hauptlagereinheit (30) zum drehbaren Lagern einer Rotorwelle (11) des Triebstrangs (10) und zum Abstützen von radialen Kräften der Rotorwelle (11), wobei die radialen Kräfte mit Bezug auf eine Rotorwellenachse (70) Komponenten in einer zu der Rotorwellenachse (70) senkrechten horizontalen Querrichtung (74) und in einer zu der Rotorwellenachse (70) und der Querrichtung (74) senkrechten Hochrichtung (72) aufweisen, einem Lagergehäuse (24) zum Aufnehmen und Lagern von Teilen (12, 13, 14) des Triebstrangs (10), und einer Hilfslagereinheit (40) zum Abstützen des Lagergehäuses (24), wobei die Lageranordnung zwei oder mehr Koppelelemente (31; 32; 41; 42; 43; 51; 52; 54) zum Lagern von mindestens einer der Hauptlagereinheit (30) und der Hilfslagereinheit (40) an der Grundplatte (20) aufweist, und wobei jedes Koppelelement (31; 32; 41; 42; 43; 51; 52; 54) als ein Stablenker (90) ausgebildet ist, welcher an seinen zwei Enden drehbar gelagert ist und in seiner Längsrichtung eine größere Steifigkeit aufweist als quer zu seiner Längsrichtung.

2. Lageranordnung nach Anspruch 1, **dadurch gekennzeichnet, dass** eine der Hauptlagereinheit (30) und der Hilfslagereinheit (40) über ein Paar erster Koppelelemente (31; 41), welche in entgegengesetzten Richtungen entlang der Querrichtung (74) verlaufen, an der Grundplatte (20) gelagert ist.

3. Lageranordnung nach Anspruch 2, **dadurch gekennzeichnet, dass** eines der ersten Koppelelemente (31; 41) an einem unteren Endabschnitt (44) der einen der Hauptlagereinheit (30) und der Hilfslagereinheit (40) drehbar gelagert ist.

4. Lageranordnung nach einem der vorangehenden Ansprüche, **dadurch gekennzeichnet, dass** eine der Hauptlagereinheit (30) und der Hilfslagereinheit (40) über ein Paar zweiter Koppelelemente (32; 42), welche in einer zu der Rotorwellenachse (70) senkrechten Ebene auf gegenüberliegenden Seiten der Rotorwellenachse (70) angeordnet sind und in der Hochrichtung (72) verlaufen, an der Grundplatte (20) gelagert ist.

5. Lageranordnung nach Anspruch 4, **dadurch gekennzeichnet, dass** eines der zweiten Koppelelemente (32; 42) an einem Ort, welcher eine Anbringungsfläche der Grundplatte (20) an den Turm (2) in der Hochrichtung (72) überlagert, an der Grundplatte (20) gelagert ist.

6. Lageranordnung nach einem der vorangehenden Ansprüche, **dadurch gekennzeichnet, dass** eine der Hauptlagereinheit (30) und der Hilfslagereinheit (40) über ein Paar dritter Koppelelemente (43), welche auf gegenüberliegenden Seiten der Rotorwellenachse (70) angeordnet sind und in Richtung der Rotorwellenachse (70) verlaufen, an der Grundplatte (20) gelagert ist.

7. Lageranordnung nach Anspruch 6, **dadurch gekennzeichnet, dass** eines der dritten Koppelelemente (43) an einem Endabschnitt (44; 45) in der Hochrichtung (72) der einen der Hauptlagereinheit (30) und der Hilfslagereinheit (40) drehbar gelagert ist.

8. Lageranordnung nach Anspruch 7, **dadurch gekennzeichnet, dass** jedes der dritten Koppelelemente (43) über ein Stützelement (50) an der Grundplatte (20) gelagert ist, wobei das Stützelement (50) um eine erste Achse (76) relativ zu der Grundplatte (20) drehbar ist und das Lagergehäuse (24) um eine zweite Achse (78) relativ zu dem Stützelement (50) drehbar ist, wobei die erste Achse (76) und die zweite Achse (78) zueinander senkrecht sind.

9. Lageranordnung nach Anspruch 8, **dadurch gekennzeichnet, dass** das Stützelement (50) über mindestens eines von einem lateralen Koppelelement (51), einem vertikalen Koppelelement (52) und einem schrägen Koppelelement (54) an der Grundplatte (20) gelagert ist.

10. Lageranordnung nach einem der vorangehenden Ansprüche, **dadurch gekennzeichnet, dass** eines der Koppelelemente (31; 32; 41; 42; 43; 51; 52; 54) als ein Aktuator zum Beeinflussen einer Ausrichtung der Rotorwelle (11) ausgebildet ist.

11. Lageranordnung nach einem der vorangehenden Ansprüche, **dadurch gekennzeichnet, dass** eines der Koppelelemente (31; 32; 41; 42; 43; 51; 52; 54) zwischen seinen Enden elektrisch isolierend ausgebildet ist.

12. Windkraftanlage (1) mit einem Triebstrang (10), einem Turm (2) und einer Lageranordnung nach einem der vorangehenden Ansprüche, welche an einer Spitze des Turms angebracht ist.

13. Windkraftanlage (1) nach Anspruch 12 mit einer Lageranordnung nach Anspruch 4 oder 5, **dadurch gekennzeichnet, dass** eines der zweiten Koppelelemente (32; 42) an einem Ort, welcher eine spitzenseitige Wand des Turms in der Hochrichtung (72) überlappt, an der Grundplatte (20) gelagert ist.
